# EUROPÄISCHE PATENTSCHRIFT

(11) **EP 0 432 190 B1**
(45) Veröffentlichungstag und Bekanntmachung des Hinweises auf die Patenterteilung: **31.03.1993**
(21) Anmeldenummer: 89909554.1
(22) Anmeldetag: 01.09.1989
(51) Int. Cl.: B29C 47/10, B29C 47/92, G01G 13/18

(54) **ZUFÜHRVORRICHTUNG FÜR SCHÜTTGUT BEI EINER MASSENDURCHSATZWIEGEEINRICHTUNG**
BULK MATERIAL FEEDING DEVICE FOR MASS FLOW DOSING APPARATUS
DISPOSITIF D'ALIMENTATION EN MATIERES EN VRAC POUR APPAREIL DE DOSAGE DE DEBIT MASSIQUE

(30) Priorität: 01.09.1988 DE 3829623
(43) Veröffentlichungstag der Anmeldung: 19.06.1991
(73) Patentinhaber: INOEX GmbH, D-32547 Bad Oeynhausen (DE)
(72) Erfinder: RIEDIGER, Roland, D-4900 Herford (DE); NEUMANN, Ulrich, D-4970 Bad Oeynhausen 1 (DE)
(74) Vertreter: Knauf, Rudolf, Dipl.-Ing.
(86) Internationale Anmeldenummer: EP8901026
(87) Internationale Veröffentlichungsnummer: WO9002643

(56) Entgegenhaltungen:
- EP-A- 0 181 738
- EP-A- 0 279 927
- WO-A-86/05875
- DE-A- 2 041 230
- DE-A- 2 515 835
- DE-A- 2 658 141
- DE-C- 342 197
- GB-A- 2 193 711
- US-A- 3 312 374

## Beschreibung

Die Erfindung bezieht sich auf eine Zuführvorrichtung für Schüttgut, bestehend aus einem insbesondere trichterförmigen Vorratsbehälter, der als Waagebehälter einer Massendurchsatzwiegeeinrichtung frei beweglich von Meßorganen getragen und mit seinem Auslauf über einer Fördervorrichtung zum Abtransport des Schüttgutes angeordnet ist.

Bei einer bekannten, für Extruder eingesetzten Zuführvorrichtung (DE 37 05 963 C1) ist zwischen dem sich verjüngenden unteren Teil des Vorratsbehälters und dessen rohrförmig ausgebildeten senkrechten Auslauf ein Übergangsstück mit einer schrägen Fläche vorgesehen. Das aus dem Vorratsbehälter in das Übergangsstück gelangende Schüttgut bricht an seiner dem Auslauf zugekehrten Seite ab und gelangt auf diese Weise in den senkrechten Auslauf. Dadurch erreicht man eine Entkopplung des Massenstromes, der sonst zu Meßfehlern bei der Massendurchsatzwiegung führen könnte. Für die meisten Anwendungsfälle reicht diese Art der Entkopplung des Massenstromes aus. Es hat sich in der Praxis jedoch gezeigt, daß der asymmetrische Austrag des Schüttgutes nicht optimal ist, weil sich dadurch unsymmetrische Belastungen an der in der Regel aus mehreren Meßorganen bestehenden Massendurchsatzwiegeeinrichtung ergeben. Hinzu kommt, daß das am Behälter starr angeordnete Übergangsstück mit der schrägen Fläche eine Dosierung des Schüttgutes nicht zuläßt. Sofern eine Dosierung gefordert wird, um den Extruder mit Schüttgut mehr oder weniger stark zu unterfüttern, ist es notwendig, zusätzliche Dosiereinrichtungen vorzusehen. Dadurch ergibt sich ein ziemlich großer vorichtungstechnischer Aufwand.

Ein weiterer Nachteil der bekannten Vorrichtung besteht darin, daß es bei Schüttgütern mit geringer Fließfähigkeit, insbesondere bei feinpulverigem Schüttgut, wegen deren mehrfacher Umleitung zu Stauungen beim Austrag kommen kann. Man hat versucht, diese Schwierigkeiten durch unterschiedlich große freie Querschnitte im Auslauf und im Übergangsstück zu vermeiden, doch bedeutete das, daß in Abhängigkeit von dem zu verarbeitenden Schüttgut verschiedene Übergangsstücke und Ausläufe bereitgehalten werden mußten.

Der Erfindung liegt die Aufgabe zugrunde, eine Zuführvorrichtung für Schüttgut zu schaffen, die weitgehend unabhängig von der Schütt- und Fließfähigkeit des Schüttgutes eine bessere gravimetrische Erfassung des Massendurchsatzes als bisher erlaubt.

Diese Aufgabe wird erfindungsgemäß bei einer Zuführvorrichtung der eingangs genannten Art dadurch gelöst, daß unter dem Auslauf ein von dem Vorratsbehälter getragener, kegeliger oder pyramidenförmiger Stau- und Stützkörper für das Schüttgut angeordnet ist, dessen Kegelbeziehungsweise Pyramidenspitze dem Auslauf zugekehrt ist und dessen Kegel- beziehungsweise Pyramidenflächen mit dem Rand des Auslaufs einen allseitigen Spalt bilden. Dabei ist vorzugsweise der größte Durchmesser des kegligen beziehungsweise pyramidenförmigen Stau- und Stützkörpers mindestens so groß wie der Durchmesser des Auslaufs.

Bei der erfindungsgemäßen Zuführvorrichtung wird das Schüttgut wegen der Kegel- beziehungsweise Pyramidenform des Stau- und Stützkörpers zu allen Seiten gleichmäßig und rückstaufrei verteilt. Wegen des Wegfalls der beim Stand der Technik mehrfachen Umlenkung des Schüttgutes bis zum Auslauf gibt es keine Nester, in denen sich Schüttgut festsetzen kann und die bisher häufig die Ursache für einen unerwünschten Rückstau, insbesondere bei Schüttgut mit geringer Fließfähigkeit, waren. Durch Änderung der Weite des allseitigen Spaltes des Stau- und Stützkörpers läßt sich unter beibehaltung des Schüttwinkels am Stau- und Stützkörper eine Dosierung des auszutragenden Schüttgutes vornehmen, ohne daß dadurch die Entkopplung des Massenstroms beeinträchtigt wird. Zusätzlicher Dosiereinrichtungen wie beim Stand der Technik, die den Austrag beeinträchtigen, bedarf es nicht.

Zwar sind bei Behältern für Schüttgut kegelförmige Verschlußkörper seit Jahrzehnten bekannt (DE-PS 342 197), doch haben diese Verschlußkörper ausschließlich eine Öffnungs- und Schließfunktion. Auf eine Entkopplung eines Massenstroms, die beim Einsatz von Massendurchsatzwiegeeinrichtungen von Bedeutung ist, kommt es hier nicht an.

Eine angestrebte Dosierung der auszufördernden Schüttgutmenge läßt sich manuell oder motorisch durchführen, indem der Stau- und Stützkörper in seinem Abstand von dem Auslauf einstellbar ist. Vorzugsweise ist dafür der Stau- und Stützkörper mittels Stellschrauben an dem Auslauf aufgehängt. Die Stellschrauben können einen motorischen Antrieb haben.

Von besonderem Wert ist es, wenn nach einer weiteren Ausgestaltung der Erfindung der motorische Antrieb der Stellschrauben oder gegenenenfalls anderer Stellglieder von einer Steuer- und Regeleinrichtung, die von der Massendurchsatzwiegeeinrichtung einen Istwert erhält, mit einem Stellsignal angesteuert wird. Die Einbeziehung des motorischen Antriebes in den Regelkreis erlaubt dann eine hochgenaue gravimetrische Dosierung des auszutragenden Schüttgutes. Hochgenau ist diese Dosierung deshalb, weil wegen des Einsatzes des Kegeligen beziehungsweise pyramidenförmigen Stau- und Stützkörpers eine Entkopplung des Schüttgutstromes zwischen dem Vorratsbehälter und der Fördervorrichtung erreicht wird, so daß nur das in dem Vorratsbehälter befindliche Schüttgut von der Massendurchsatzwiegeeinrichtung erfaßt wird.

Im folgenden wird die Erfindung anhand einer zwei Ausführungsbeispiele darstellenden Zeichnung näher erläutert. Im einzelnen zeigen:
- Fig. 1: eine Zuführvorrichtung für Schüttgut zu einem Extruder in schematischer Darstellung und in Seitenansicht,
- Fig. 2: einen Teil eines Vorratsbehälters mit seinem Auslauf der Zuführvorrichtung gemäß Fig. 1 in schematischer Darstellung und in Seitenansicht,
- Fig. 3: einen Teil des Vorratsbehälters gemäß Fig. 1 mit Auslauf in einer zu Fig. 2 anderen Ausführung in schematischer Darstellung und in Seitenansicht,
**und**
- Fig. 4: einen Regelkreis für die gravimetrische Dosierung der Zufuhr des Schüttgutes bei einer Zuführvorrichtung gemäß Fig. 1 und 3.

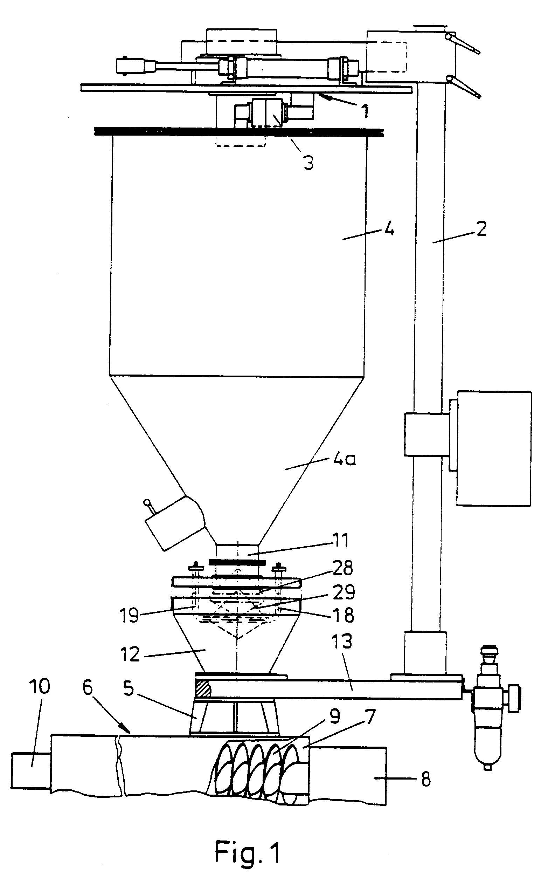

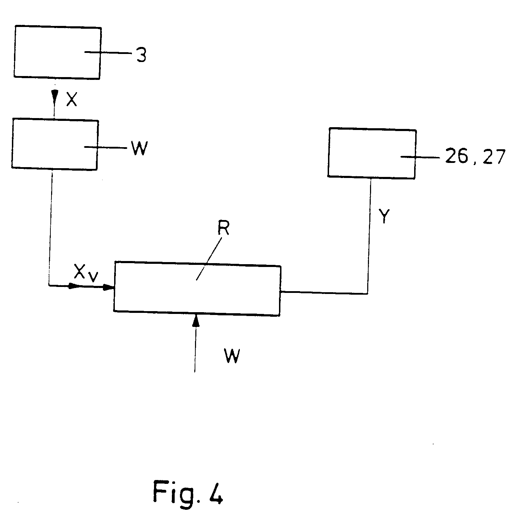

Gemäß Fig. 1 ist an einem Kragarm 1 eines Ständers 2 über Meßorgane 3 ein von oben mit Schüttgut befüllbarer, als Waagebehälter ausgebildeter Vorratsbehälter 4 aufgehängt, dessen unterer Teil 3 trichterförmig ausgebildet ist. Die auf diametral gegenüberliegenden Seiten angeordneten Meßorgane 3 sind auf Biegung ansprechende Elemente. Ihre Meßwerte liefern sie an eine im einzelnen noch zu beschreibende Regeleinrichtung gemäß Fig. 4, die eine Auswerteeinrichtung für die Massendurchsatzerfassung umfaßt. Der Ständer 2 ist starr mit dem Einlauf 5 einer Fördereinheit 6 verbunden, die in diesem Fall aus einem Zylinder 7 mit einer darin angeordneten und von einem Antrieb angetriebenen Schnecke 9 und einer Düse 10 eines Extruders besteht. Der Behälter 4 trägt an seinem unteren, sich trichterförmig verjüngenden Teil 4a einen rohrförmigen, kreiszylindrischen Auslauf 11. Dieser Auslauf 11 mündet in einen dem Einlauf der Fördereinheit 6 vorgeordneten Trichter 12, der von einem Kragarm 13 des Ständers 2 getragen ist.

Das Schüttgut im Vorratsbehälter 4 kann über den Auslauf 11 in den Trichter 12 fließen, von dem es über den Einlauf 5 in die Fördereinheit 6 gelangt.

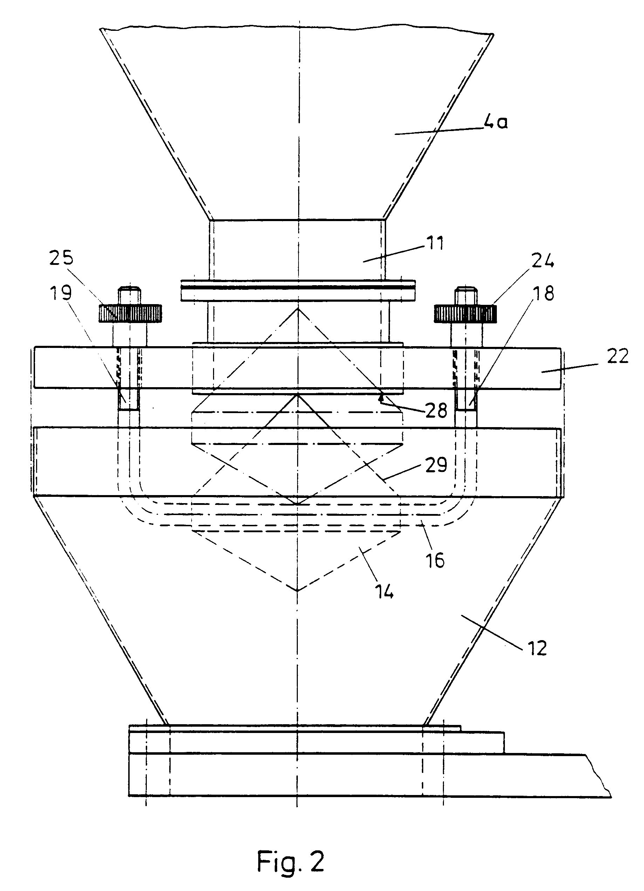

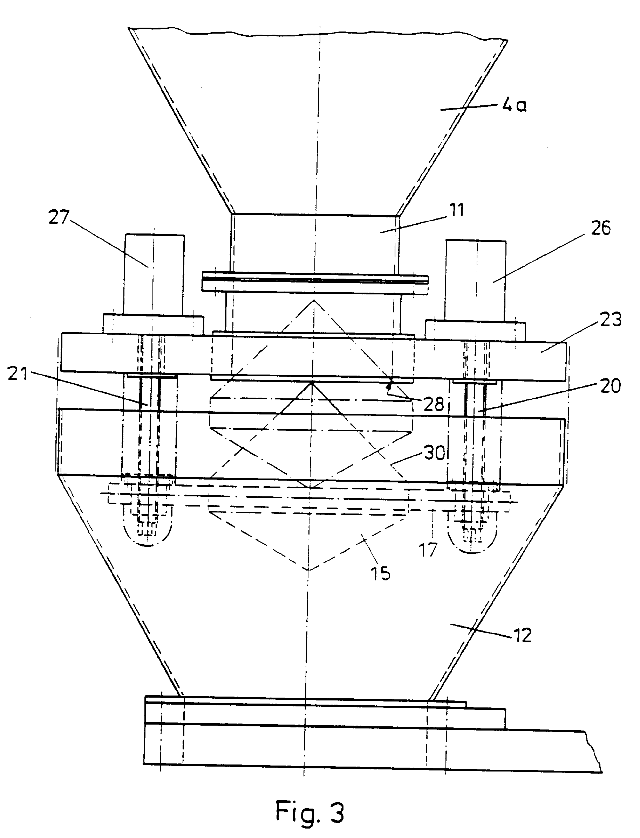

Wie am besten aus den vergrößerten Darstellungen der Figuren 2 und 3 zu ersehen ist, ist unterhalb des Auslaufs 11 des Vorratsbehälters 4 ein kegeliger beziehungsweise pyramidenförmiger Stau- und Stützkörper 14,15 angeordnet, der an Traversen 16,17 und Schrauben 18-21 aufgehängt ist. Die Schrauben ihrerseits sind in einer am Auslauf 11 gehaltenen Platte 22,23 gehalten. Während beim Ausführungsbeispiel der Fig. 2 mittels Stellmuttern 24,25 der Stau- und Stützkörper 14 in seinem Abstand von dem Auslauf 11 einstellbar ist, ist er im Ausführungsbeispiel der Fig. 3 mittels Stellmotore 26,27 einstellbar. In beiden Ausführungsbeispielen ist der kegelige beziehungsweise pyramidenförmige Stau- und Stützkörper 14 in seinem Durchmesser derart dimensioniert, daß er die untere Öffnung des Auslaufs 11 überdeckt. Bei einem kegeligen Stau- und Stützkörper sollte der Auslauf 11 kreiszy!indrisch sein, während er bei einem pyramidenförmigen Stau- und Stützkörper der Form der Pyramide angepaßt sein sollte.

In jedem Fall ergibt sich zwischen dem unteren Rand 28 und der dem Auslauf 11 zugekehrten Oberfläche 29,30 des Stau- und Stützkörpers 14,15 ein Durchtrittsspalt für das Schüttgut. Durch den Stau- und Stützkörper stützt sich eine Säule von Schüttgut ab, an deren Außenrand im Bereich des Durchtrittsspaltes das Schüttgut dann abbricht und in den Trichter 12 fällt. Auf diese Art und Weise findet die Entkopplung des Massenstromes statt, ohne daß es zu unerwünschten Stauungen am Auslauf kommen kann.

Wie Fig. 4 zeigt, liefern die Meßorgane 3 gewichtsabhängige Signale X an einen Meßwertwandler W, der dieses Signal für den Massendurchsatz umsetzt, zum Beispiel in ein Signal, das die Abnahme des Gewichtes im Behälter 4 pro Zeiteinheit darstellt. Dieses Signal Xᵥ für den Massendurchsatz entspricht dem Istwert der Regelgröße. Ein Regler R vergleicht dieses Signal Xᵥ mit dem Sollwertsignal W und liefert in Abhängigkeit von diesem Vergleich ein Stellsignal Y an die Stellmotore 26,27, mit denen die auszutragende Menge des Schüttgutes eingestellt wird. Auf diese Art und Weise ist es somit möglich, mit höchster Genauigkeit gravimetrisch das auszufördernde Material zu dosieren.

## Patentansprüche

1. Zuführvorrichtung für Schüttgut, bestehend aus einem insbesondere trichterförmigen Vorratsbehälter (4), der als Waagebehälter einer Massendurchsatzwiegeeinrichtung frei beweglich von Meßorganen (3) getragen ist und mit seinem Auslauf (11) über einer Fördereinrichtung (6) zum Abtransport des Schüttgutes angeordnet ist, **dadurch gekennzeichnet,** daß unter dem Auslauf (11) ein von dem Vorratsbehälter (4) getragener, kegeliger oder pyramidenförmiger Stau- und Stützkörper (14,15) für das Schüttgut angeordnet ist, dessen Kegel- beziehungsweise Pyramidenspitze dem Auslauf (11) zugekehrt ist und dessen Kegel- beziehungsweise Pyramidenflächen (29,30) mit dem Rand (28) des Auslaufs (11) einen allseitigen Spalt bilden.

2. Zuführvorrichtung nach Anspruch 1,
**dadurch gekennzeichnet,** daß der größte Durchmesser des kegeligen beziehungsweise pyramidenförmigen Stau- und Stützkörpers (14,15) mindestens so groß wie der Durchmesser des Auslaufs (11) ist.

3. Zuführvorrichtung nach Anspruch 1 oder 2,
**dadurch gekennzeichnet,** daß der Stau- und Stützkörper (14,15) in seinem Abstand von dem Auslauf (11) einstellbar ist.

4. Zuführvorrichtung nach Anspruch 3,
**dadurch gekennzeichnet,** daß der Stau- und Stützkörper (14,15) mittels Stellschrauben (18,19,20,21) an dem Auslauf (11) aufgehängt ist.

5. Zuführvorrichtung nach Anspruch 4,
**dadurch gekennzeichnet,** daß die Stellschrauben (20,21) motorisch angetrieben sind.

6. Zuführvorrichtung nach Anspruch 5,
**dadurch gekennzeichnet,** daß der motorische Antrieb (26,27) der Stellschrauben (20,21) von einer Steuer- und Regeleinrichtung (R), die von einer Massendurchsatzwiegeeinrichtung einen Istwert (Xᵥ) erhält, mit einem Stellsignal (Y) angesteuert wird.

## Claims

1. A feed device for bulk material, comprising a more particularly funnel-shaped storage tank (4), which is borne freely movable by measuring members (3) as a weighing tank of a mass throughput weighing system and is disposed with its outlet (11) over a conveyor system (6) for the removal of the bulk material, characterized in that disposed below the outlet (11) is a conical or pyramidal damming and supporting member (14, 15) for the bulk material which is borne by the storage tank (4) and whose conical or pyramidal apex faces the outlet (11), its conical or pyramidal surfaces (29, 30) cooperating with the edge (28) of the outlet (11) to form a gap on all sides.

2. A feed device according to claim 1, characterized in that the maximum diameter of the conical or pyramidal damming and supporting member (14, 15) is at least as large as the diameter of the outlet (11).

3. A feed device according to claims 1 or 2, characterized in that the distance of the damming and supporting body (14, 15) from the outlet (11) is adjustable.

4. A feed device according to claim 3, characterized in that the damming and supporting body (14, 15) is suspended from the outlet (11) by means of locking screws (18, 19, 20, 21).

5. A feed device according to claim 4, characterized in that the locking screws (20, 21) are motor-driven.

6. A feed device according to claim 5, characterized in that the motor drive (26, 27) for the locking screws (20, 21) is operated by an adjusting signal (Y) of an open and closed control system (R), which obtains an actual value (Xᵥ) from a mass throughput weighing system.

## Revendications

1. Dispositif d'alimentation pour produit en vrac, constitué d'un réservoir de stockage (4), en particulier en forme d'entonnoir, qui est porté par des organes de mesure (3) en étant mobile librement en tant que récipient de balance d'une installation de pesage par débit massique et qui est disposé avec sa décharge (11) au-dessus d'un dispositif transporteur (6) pour l'évacuation du produit en vrac,
caractérisé en ce qu'un corps de retenue et de support (14, 15) conique ou pyramidal, porté par le réservoir de stockage (4), est disposé sous la décharge (11), dont la pointe conique ou respectivement pyramidale est tournée vers la décharge (11) et dont les surfaces coniques ou respectivement pyramidales (29, 30) forment avec le bord (28) de la décharge (11) une fente polydirectionnelle.

2. Dispositif d'alimentation selon la revendication 1, caractérisé en ce que le plus grand diamètre du corps de retenue et de support (14, 15) conique ou respectivement pyramidal est au moins aussi grand que le diamètre de la décharge (11).

3. Dispositif d'alimentation selon la revendication 1 ou 2, caractérisé en ce que le corps de retenue et de support (14, 15) est réglable en ce qui concerne sa distance à la décharge (11).

4. Dispositif d'alimentation selon la revendication 3, caractérisé en ce que le corps de retenue et de support (14, 15 ) est suspendu à la décharge (11) au moyen de boulons de réglage (18, 19, 20, 21).

5. Dispositif d'alimentation selon la revendication 4, caractérisé en ce que les boulons de réglage (20, 21) sont entraînés par moteur.

6. Dispositif d'alimentation selon la revendication 5, caractérisé en ce que l'entraînement par moteur ( 26, 27 ) des vis de réglage (20, 21 ) est commandé par un dispositif de commande et de réglage (R) qui reçoit d'une installation de pesage par débit massique une valeur instantanée (Xᵥ) au moyen d'un signal de commande ( Y ).
